# EUROPEAN PATENT SPECIFICATION

(11) **EP 1 867 762 B1**
(45) Date of publication and mention of the grant of the patent: **10.09.2008**
(21) Application number: 06404002.5
(22) Date of filing: 13.06.2006
(51) Int. Cl.: D01D 5/00, D01F 9/12

(54) **Carbon nanofibers containing catalyst nanoparticles**
Kohlenstoffnanofasern enthaltend katalytisch wirksame Nanoteilchen
Nanofibres de carbone contenant de nanoparticules catalytiques

(43) Date of publication of application: 19.12.2007
(73) Proprietor: Sabanci Üniversitesi, 34956 Tuzla-Istanbul (TR); TÜBITAK Türkiye Bilimsel ve Teknolojik Arastirma Kurumu, 06100 Kavaklidere Ankara (TR)
(72) Inventor: Birkan, Burak, 34956 Tuzla-Istanbul (TR); Menceloglu, Yusuf Ziya, 34956 Tuzla-Istanbul (TR); Gülgün, Mehmet Ali, 34956 Tuzla-Istanbul (TR)
(74) Representative: Arkan, Selda Mine

(56) References cited:
- WO-A-20/05021845
- WO-A-20/06012548
- WANG ET AL: "Preparation of silver nanoparticles dispersed in polyacrylonitrile nanofiber film spun by electrospinning" MATERIALS LETTERS, NORTH HOLLAND PUBLISHING COMPANY. AMSTERDAM, NL, vol. 59, no. 24-25, October 2005 (2005-10), pages 3046-3049, XP005019574 ISSN: 0167-577X

## Description

The invention relates to a method for obtaining in-situ carbon nanofibers containing catalytic material nanoparticles, to the products obtained by said method and to the use of said products in different applications.

Nanomaterials draw much attention nowadays because the variety of their use in many fields from catalysis to photonics and from electrochemical sensors to filters. A wide variety of nanomaterials, especially nanoparticles with different properties have found broad application in many kinds of analytical methods. Due to their small size (generally 1 -100 nm) nanoparticles exhibit unique chemical, physical and electronic properties that are different from those of bulk materials with a high metal atom to surface ratio.

The most known use of catalyst is the use of metal nanoparticles on the electrode of a Polymer Electrolyte Membrane Fuel Cell on which the electrode consists of a Pt catalyst, either Pt black or Pt on a carbon support.

The catalytic behavior of a precious metal supported on a given material is determined mainly by the microscopic distribution of the metal over the support particles, the metal oxidation state and sensitivity to the fuel quality. Because such catalytic materials are expensive, the aim is to use less catalytic material but to maintain the catalytic activity.

Methods for obtaining in-situ of metal nanoparticles is known in the prior art. For example a method for forming metal particles and fibers is explained in US-A-6,346,136. In this patent carbon nanotubes/ nanofibers are used as templates which are mixed with solvate metal salt precursors, followed by calcination and reduction of the above mixture at an elevated temperature and under a flow of inert or reductive gas.

WO 2006/012548 relates to fiber structures that include a catalytic material. In this patent electrospinning is used to form a polymeric material fiber structure which is then heat treated for converting the polymeric material fiber structure to a carbon fiber structure including catalytic material particles supported on the carbon fiber structure, by this method 50 nm average particle sized metal particles are formed on the carbon fibers.

Another prior art is Materials Letters, 59 (2005) 3046 - 3049 by Wang, Y. Z et al., where Ag nanoparticles dispersed in polyacrylonitrile (PAN) nanofiber film spun by electrospinning are in situ prepared by reduction of Ag ions in N₂H₅OH aqueous solution.

In the prior art, the production of nanoparticle metal coated nanofibres is always achieved by additional steps like electro deposition, vacuum deposition, selective reducing etc. when synthesizing metallised high surface area nanofibers.

Moreover some metallised nanofibres are obtained in the prior art, the dimensions of these nanofibers as well as the dimensions of the metal particles on them are restricted by the use of the metal/reducer couple, the metal weight percentage on the polymer solution and the heat treatment cycle.

### Objects of the invention

Thus, there is a need for metal nanoparticles supported in carbon fiber with a smaller fiber diameter and for a method to produce them in an efficient and cost effective way.

One object of this invention is to provide metal nanoparticles supported on polymeric fibers having nano-dimensional fiber diameters.

It is a further object of this invention to provide a method for obtaining in-situ of catalytic material nanoparticles supported on polymeric nanofibers.

Another object of this invention is to provide catalytic material nanoparticles supported on carbon fibers having nano-dimensiorial fiber diameters.

It is a further object of this invention to provide a method for obtaining in-situ of catalytic material nanoparticles supported on carbon nanofibers.

The objects of this invention are met by the method and products according to the claims appended hereto.

The invented method is applicable to every type catalyst material precursor, provided an appropriate reducer is found. By the technique of the invention, there is no need to synthesize catalytic material nanoparticle prior the electrospinning, nor any additional precursors rather than the source itself or no any additional heating cycles to form the catalytic material supported carbon fiber, rather than converting the polymeric fiber to a carbon fiber.

By the method of the invention, it is possible to decrease the catalytic material concentration up to 0.02 mg catalytic material/cm² area of the carbon fiber structure by enhancing catalytic performance and/or enabling by using less catalytic material for equivalent catalytic performance which, amongst other advantages can help to save costs.

### Short description of the invention

The invention relates a method for synthesizing carbon nanofibers containing catalytic material particles having an average particle size ranging of from 0.5 to 40nm comprising the following steps:
a) electrospinning a polymer solution and a catalytic material precursor for obtaining polymer fibers containing catalytic material precursor particles, the catalytical precursor concentration in the polymer solution being from 0.1 to 20.0wt% with respect to the polymer weight;
b) reducing the product obtained in a) with a reducing agent to form polymer fibers containing catalytic material particles;
c) heat treating the product obtained in b) for converting the polymer fibers containing catalytic material particles into carbon fibers containing catalytic material particles
characterized in that
the polymer in step a) is a radical or condensation polymerization product of a monomers chosen
I) from the group comprising vinylic monomers with
II) difunctional monomers, chosen so as to form an electrostatic interaction with the metal precursor to control the size and distribution of the metal precursor within the fiber matrix; wherein the percentage of the difunctional monomer ranges of from 1 to 99 mol % in the polymer backbone;
and in that in step c) the heat treatment is done by heating first to a temperature within a first temperature range of between 100°C and 500°C and then to a temperature within a second temperature range of between 500°C and 3500°C.

The difunctional monomer is chosen from the group comprising monomers with an acidic, acrylic, acrylate, alcohol, amine, amide, anhydride, arylene, carbonate, cyclic, esteric, etheric, heterocylic, ketonic, olefinic, oxide, sulfide, sulfonamide, sulfonic, thiazole, thiol, or phosphonic side chain or a monomer with a side chain of having a combination of these functional groups.

In step a) the catalytic material precursor is a compound of metal chosen from compounds of palladium, platinum, gold, silver, rhodium, rhenium, ruthenium, osmium, iridium, iron, chromium, cobalt, copper, nickel, manganese, tungsten, molybdenum, niobium, scandium, titanium, vanadium, lanthanum, tantalum, lead, indium, cadmium, tin, bismuth, hafnium, yttrium, zirconium, technetium, antimony and gallium or a combination of those. In step a) the polymer solution is formed with a method chosen from the group comprising: dissolving the catalytic material precursor in the polymer solution; dissolving together a polymeric material and a compound of a catalytic material precursor; and dispersing the solid catalytic material particles in the polymer solution or a combination of those.

In step b) the reducing agent is chosen from the group comprising hydrazine compounds like hydrazine hydrochloride, hydrazine sulfate, hydrazine hydrate); alkali borohydride, formaldehyde, substituted pyridines, hypophosphites, phosphites, hyposulfites, sulfites, sulfoxylates, thiosulfates, azides, or formates, CuCl and SnCl₂ dissolved in a solvent.

In step c) the heat treatment is done by heating first to a temperature within a first temperature range of between 100°C and 500°C and then to a temperature within a second temperature range of between 500°C and 1150°C.

The invention also relates to a first intermediate product obtained in step a) namely a polymer fiber having an average fiber diameter between 30nm and 500nm and containing catalytic material precursor particles.

The invention also relates to a second intermediate product obtained in step b) namely a polymer fiber having an average fiber diameter of between 30nm and 500nm and containing catalytic material particles.

Preferably the catalytic material particles are dispersed throughout the structure of the polymer fibers at a substantially constant concentration. Advantageously, the catalytic material particle concentration in the polymer fiber containing catalytic material particles is less than 0.2 mg catalytic material /cm².

The invention also relates to the product obtained in the method cited above, namely to carbon nanofibers containing catalytic material particles comprising at least one carbon fiber having a length greater than 500µmcontaining the catalytic material particles comprising at least one carbon fiber having a length greater than 500µm containing the catalytic material particles having an average particle size ranging of from 0.5 to 40nm in and on the structure of the carbon fiber.

Preferably the carbon fibers are solid and have a thickness less than 10µm. In preference the carbon fibers have a length greater than 1cm and an average diameter of between 30 nm and 500 nm.

According to a preferred embodiment the catalytic material particle concentration of the carbon fibers is less than 0.2 mg catalytic material /cm² area.

Preferably the resistivity of the carbon fibers containing catalytic material particules is less than 0.1 Ohms-m and the catalytic material particles are dispersed throughout the structure of the carbon fiber in a substantially constant concentration.

The invention also relates to the use of the product in applications chosen from the group comprising: membranes, filtration devices, electrodes in electrochemical devices, fuel-cell electrodes, photodiodes, batteries.

### Brief description of the drawings:

- Figure 1: is a 1 H-NMR analysis of P(AN-co-5%AMPS) by 500 Mhz
- Figure 2: is a FT-IR analysis of P(AN-co-5%AMPS)
- Figure 3: is a thermal analysis of P(AN-co-5% AMPS)
- Figure 4 A, B: are SEM pictures of Electrospun P(AN-co-5%AMPS), 0.05M PdCl₂ polymeric nanofibers at different magnifications
- Figure 5 A, B, C: are SEM pictures of reduced Electrospun P(AN-co-5%AMPS), 0.05M PdCl₂ polymeric nanofibers at different magnifications
- Figure 6 A, B: are SEM pictures Carbonized Electrospun P(AN-co-5%AMPS), 0.05M PdCl₂ polymeric nanofibers at different magnifications
- Figure 7 A, B, C: are TEM pictures Carbonized Electrospun P(AN-co-5%AMPS), 0.05M PdCl₂ polymeric nanofibers at different magnifications
- Figure 8A, B, C: are TEM pictures Carbonized Electrospun P(AN-co-5%AMPS), 0.01 M PdCl₂ polymeric nanofibers at different magnifications
- Figure 9 A, B, C: are TEM pictures Carbonized Electrospun P(AN-co-5%AMPS), 0.005M PdCl₂ polymeric nanofibers at different magnifications
- Figure 10 A, B, C: are SEM pictures Carbonized Electrospun P(AN-co-5%VPA), 0.05M PdCl₂ polymeric nanofibers at different magnifications
- Figure 11 A, B: are SEM pictures Carbonized Electrospun P(AN-co-5%VPYR), 0.05M PdCl₂ polymeric nanofibers at different magnifications
- Figure 12 A, B: are TEM pictures Carbonized Electrospun P(AN-co-5%AMPS), 0.05M PtCl₂ polymeric nanofibers at different magnifications

### Detailed description of the invention:

The invention relates thus to a method for synthesizing of catalytic material particles supported in carbon fiber structure, comprising the following steps:
a) electrospinning a polymer solution and a catalytic material precursor for obtaining polymer fibers containing catalytic material precursor particles;
b) reducing the product obtained in a) with a reducing agent to form polymer fibers containing catalytic material particles;
c) heat treating the product obtained in b) for converting the polymer fibers containing catalytic material particles into carbon fibers containing catalytic material particles

The catalytic material precursor is a compound of metal chosen from compounds of palladium, platinum, gold, silver, rhodium, rhenium, ruthenium, osmium, iridium, iron, chromium, cobalt, copper, nickel, manganese, tungsten, molybdenum, niobium, scandium, titanium, vanadium, lanthanum, tantalum, lead, indium, cadmium, tin, bismuth, hafnium, yttrium, zirconium, technetium, antimony and gallium or a combination of those.

The catalytic material precursor concentration in the polymer solution is from 0.1 % to 20.0% in weight with respect to the polymer weight. The metal precursor is soluble in the solvent used for electrospinning to form a homogenous solution.

The polymer used in step a) is a polymer obtained by radical or condensation polymerization of vinylic monomers with a difunctional monomer bearing an acrylic, acrylate, carbonate, amide, heterocyclic, sulfonic, phosphonic or acidic side chain.

Each monomer gives a different property to the polymer. The most known and used polyacrylonitrile (PAN), homopolymer of acrylonitrile monomer is a precursor of the carbon fibers. Presence of acrylonitrile monomer provides ability to obtain carbon nanofibres. Moreover, PAN in dimethyl formamide is a good polymer-solvent system from aspect of electrostatic spinnability.

The second monomer, which is difunctional, is chosen to form an electrostatic interaction with the metal precursor to control the size and distribution of metal precursor within the fiber matrix. Side chain ionic groups, bearing oxygen, nitrogen, sulfur, phosphorous and halogens are able to form a covalent bond with the metal by donating their lone pair 2p electrons to metal, which in turn metal backdonates electrons from occupied d or f orbitals into empty Π*-2p antibonding orbitals of ionic pendant groups.

The coordination between side chain and metal ion makes PAN-copolymers an ideal template for the metal ion, which provides an excellent precursor for the in-situ synthesis of metal nanoparticles.

The coordination of metal with ionic groups prevents the agglomeration of the metal in reduction process and enables the homogenous dispersion of metal in PAN-copolymer nanofibrous film. Therefore the distribution of the functional monomer within the acrylonitrile polymer matrix becomes a crucial factor for manipulating the particle size of the metal ion within the polymeric fiber. In the present technique the comonomer percentage varied from about 1 mol % to about 99 mol% in the polymer backbone, which enables the control of particle size and distribution along the polymeric fiber structure.

The reducing agent is chosen from the group comprising hydrazine compounds (eg. hydrazine hydrochloride, hydrazine sulfate, hydrazine hydrate), alkali borohydride, formaldehyde, substituted pyridines, hypophosphites, phosphites, hyposulfites, sulfites, sulfoxylates, thiosulfates, azides, or formates, Cucl and SnCl₂. The reducing agent is preferably hydrazine. Hydrazine can work as a reducing agent even if attached covalently to fiber surface. Hydrazine is used on the fibre surfaces efficiently for metal reductions. Oxidation of hydrazine reduces the metal nano- particles on the surface of polymer fibers.

When the metallization process is completed, electrospun mat is treated with water for the removal of excess reducing agent. After the washing process fiber mats were dried at vacuum oven for several hours.

During the heat treatment step the polymeric fiber structure is converted to carbon fiber structure including catalytic material particles. After heat treatment, further processing techniques may be applied to the carbon fiber structure including particles to form the desired final structure if needed. For instance, fiber structures of the invention may be used to form electrochemical devices by conventional techniques that function as electrodes in such devices. During the high temperature stage, the polymeric material fibers are converted to carbon (at least to some extent, though other residual elements may remain as described below).

The heating cycle lead the metal nanoparticles to the surface of the carbon fibers, but not the particle growth. It is possible that the dimension of the polymer fiber is reduced due to shrinking to carbon fibers. For example, the average diameter of the carbon fiber may be less than 50% than the average diameter of the polymer fiber.

The heat treatment step involves two consecutive heating cycles, namely from a low temperature range to a high temperature range.

The first, low temperature heating cycle ranges between about 100°C and about 500°C under air atmosphere. This is a stabilization step on which also bonds like carbon/hydrogen bonds may be broken to break down the structure of the polymeric material and may last between about 10 minutes and about 10 hours with the time depending on the temperature applied.

The second, high temperature heating cycle ranges between about 500°C and about 3500°C and is generally between about 800°C and about 1100°C under inert atmosphere like argon or nitrogen. This step may last between about 1 minute and about 120 minutes. The heating time depends on the applied temperature.

The invention also relates to carbon nanofibers containing catalytic material particles as obtained with the method of the invention.

The main component of the carbon fibers is of course carbon, however if the conversion to carbon was not complete during the heat treatment these fibers may also comprise other residual elements like nitrogen and/or hydrogen (or other elements) from the polymeric material formed. Thus depending on the conversion of the polymer fibers, the carbon percentage may range from about 75% to 100% by weight, based on the total weight of the fibers.

Generally, the carbon concentration in the carbon fibers should be high enough to provide the requested conductivity in the applications where they are used. The specific resistivity (and conductivity) of the fibers ranging from about 0.1 Ohms-m to about 10⁻⁶ Ohms-m may depend on the carbon content in the fibers which is in turn may depend on the conditions of the heat treatment. It should be understood that the fibers according to the invention may have resistivity values that are outside the ranges given above.

The catalytic material particles in the fibers have an average particle size of on the order of nanometers. Depending on the processing concentrations the average particle size ranges from about 0.5 nm to about 40 nm. As the particle size decreases, the uniformity of the catalytic material particle distribution along the carbon fiber increases.

The average particle size of the catalytic materials is typically greater than 0.5nm because of processing limitations. In fact it is difficult to obtain catalytic material particles throughout the fiber with a consistent average particle size less than 0.5nm.

The particle size may be controlled through processing conditions such as copolymer percentage and distribution along the polymer backbone, catalytic material precursor and heat treatment conditions (e.g., temperature and time). The desired average particle size may depend on several factors including carbon fiber dimensions, catalytic performance and the type of the application used.

In order to determine the average particle sizes, the numbers of representative particles were averaged using, for example, SEM techniques. As used in here, the average particle size includes sizes of primary particles and sizes of particle agglomerates. However in certain applications it is also possible to use particle sizes different from the above ranges.

It is preferable that the distribution of the catalytic material is homogeneous throughout the structure of the fiber. Also the distance between adjacent particles on a fiber may be between about 40nm and 1 micron, though other distances are also possible. The inter-particle distances depend in part, on the catalytic metal concentration and copolymer percentage and distribution along the polymer backbone.

The production, according to methods of the present invention, of carbon nanofibers containing catalytic material nanoparticles are illustrated in the following examples.

### EXAMPLES

In the experiments, the following equipment was used:
Vacuum oven: WTB-Binder
NMR analyzer: Varian Inova NMR.
Differential Scanning Calorimetry: Netzsch 449C STA and Netzsch DSC 204
SEM pictures: Supra Gemini 35 VP from Leo.
TEM pictures: JEM 2000FX, JEOL.
Ultra-sonicator: Bandelin Sonorex Ultrasonicator
Mechanical Stirrer: Heidolph RZR 2102
Magnetic Stirrer: VELP Scientifica Heating Magnetic Stirrer
FTIR Spectrometer: Bruker Equinox 55
Scanning electron microscope (SEM): Leo G34-Supra 35VP

### EXAMPLE 1

The solution copolymerization of acrylonitrile (AN) with 2-acrylamido-2-methylpropane sulfonic acid (AMPS) is accomplished in N,N-dimethylformamide (DMF) at 80°C for 24 hours. Monomers, initiator and solvent are purified before the reaction by conventional methods; recrystallization, vacuum distillation and passing through a column where needed.

Monomer ratios are selected to achieve a 95 mol % acrylonitrile and 5 mol % AMPS in the final polymer according to the monomer reactivity ratios, 10.09gr acrylonitrile and 2.05gr AMPS respectively.

AIBN is used as radical initiator at 1/1000 mol % ratio with respect to monomers. 20 ml of DMF is used as solvent. The solution is deaerated by 3 freeze-thaw cycles at liquid nitrogen temperature and the reactor vessel is kept at nitrogen atmosphere through bubbling during the reaction. The resulting product is precipitated in acetone and dried in vacuum oven at 50°C for 24 hours. 9.59gr of product handled at the end of the polymerization.

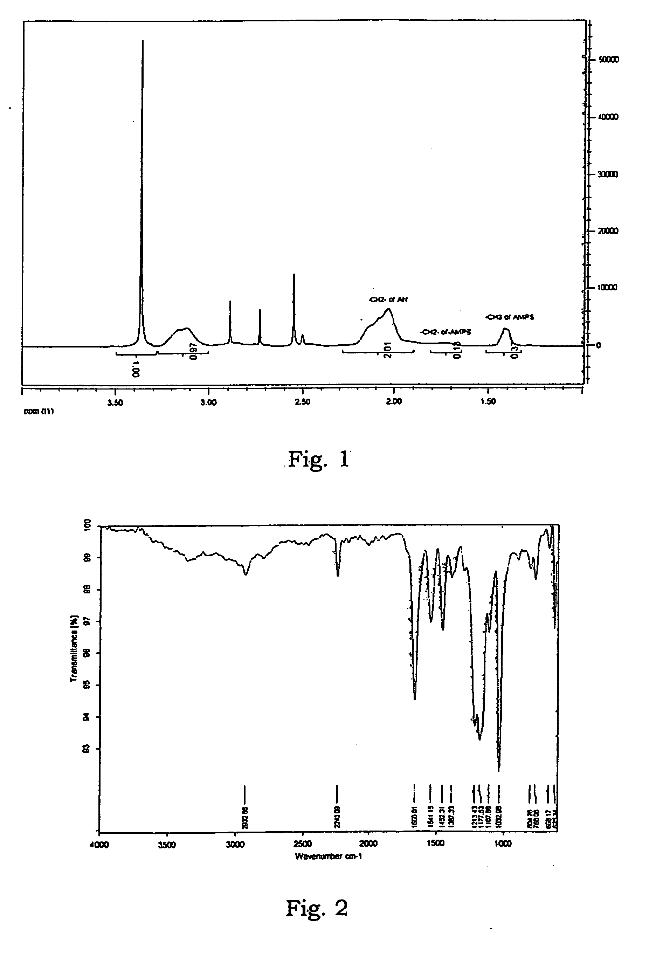

1-H NMR spectrum (Figure 1.) analysis show -CH₂ protons of acrylonitrile and AMPS at around 3.00 to 3.50ppm and -CH protons of acrylonitrile at the backbone at 2.04ppm and - CH protons of AMPS at the backbone at 1.72ppm. The methyl groups of AMPS at the side chain are shown at 1.43ppm. The integral analysis reveals that the molecular backbone consists of 6 mol% of AMPS and 94 mol% of AMPS.

FT-IR spectrum (Figure 2.) analysis shows the characteristic vibration of -CN at 2243 cm⁻¹. The strong absorption bands at round 1540 cm⁻¹ and 1660 cm⁻¹ confirm the amide groups of the AMPS unit in the host polymer. In addition, two sharp peaks at 1033 cm⁻¹ and 1213 cm⁻¹ verifying the S-O stretching typical of the sulfonate groups were clearly observed.

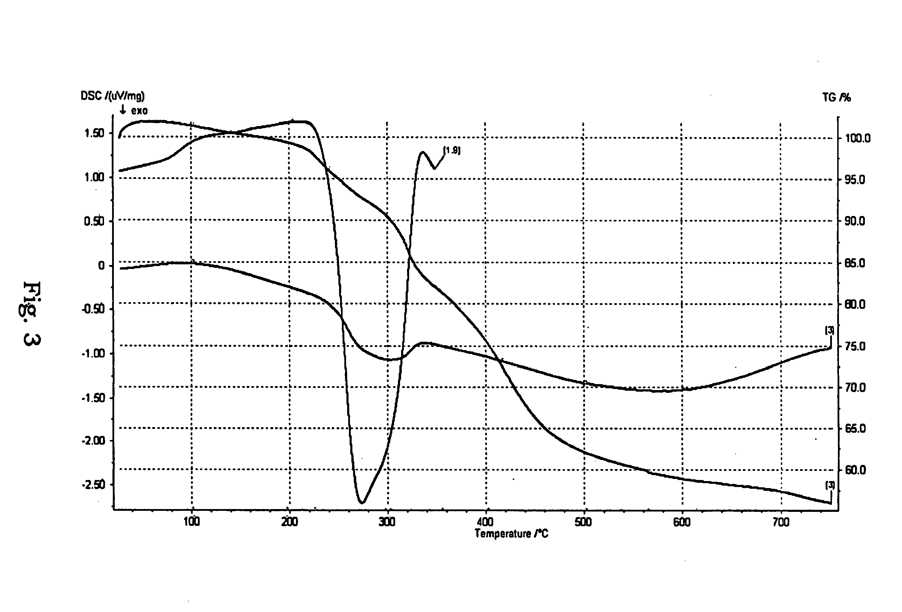

Thermal analysis (Figure 3.) of the polymer shows a broad glass transition around 107°C and 128°C and following decomposition beginning from about 249°C and continues sharply to about 560°C by the loss of 40% of total mass to that temperature. The residual mass is around 55% at 800°C.

A clear 15 wt % P(AN-co-5%AMPS) polymer solution is prepared by 1) adding 1.5g P(AN-co-5%AMPS) into 10 g (10.6 milliliter) N,N-dimethylformamide (DMF), 2) mixing with a magnetic stir bar at room temperature for 24 hours.

A 0.05 M salt solution is prepared by adding 17.7 mg palladium (II) chloride in 2.0 milliliter polymer solution. To ensure homogeneity the polymer solution is mixed for 24 hours with a magnetic stir bar at room temperature.

The homogeneous solution is processed by electrospinning which is recognized as an efficient technique for generating of fibers in nanometer to micron diameter range from polymer solutions, composites and ceramics. In the present technique the polymer solution is placed in a Pasteur pipette and subjected to a electrical potential. A grounded sheet is positioned across the high voltage probe that is in a glass tube filled with polymer solution. When potential difference overcomes the surface tension, a thin jet ejects from the polymer droplet being held on the glass tip. Solvent is evaporated and nano-scale fibers remain on the grounded sheet. Eventually, a mat-like structure is obtained that can be easily detached from the foil. Polymer solution is held in a glass capillary. The diameters of the capillary and the tip were 5 and 1 mm, respectively.

The average fiber diameter ranges from 30 nm to about 500 nm, depending on the viscosity of the polymer solution, applied potential difference and tip to ground distance. During the present technique, polymer concentration changes from 8 wt% to 25 wt % with respect to the solvent.

The electrical field is provided by a high voltage (HV) 50 kV with 500A direct current. The output voltage and the current between grounded aluminum sheet and the copper probe are measured from an external connection of the power supply with multimeter.

The potential difference between the pipette and the ground used to electrospin vary in the range 0-35 kV.

The copper probe of the HV generator is inserted into the capillary and electricity is conducted through the solution. The capillary is tilted approximately 10° from the horizontal to maintain a droplet of solution at the tip of the pipette. A grounded aluminum sheet is positioned opposite and perpendicular to the tip of the pipette onto which the fibers are deposited. After solvent evaporation, fibers are ready for characterization.

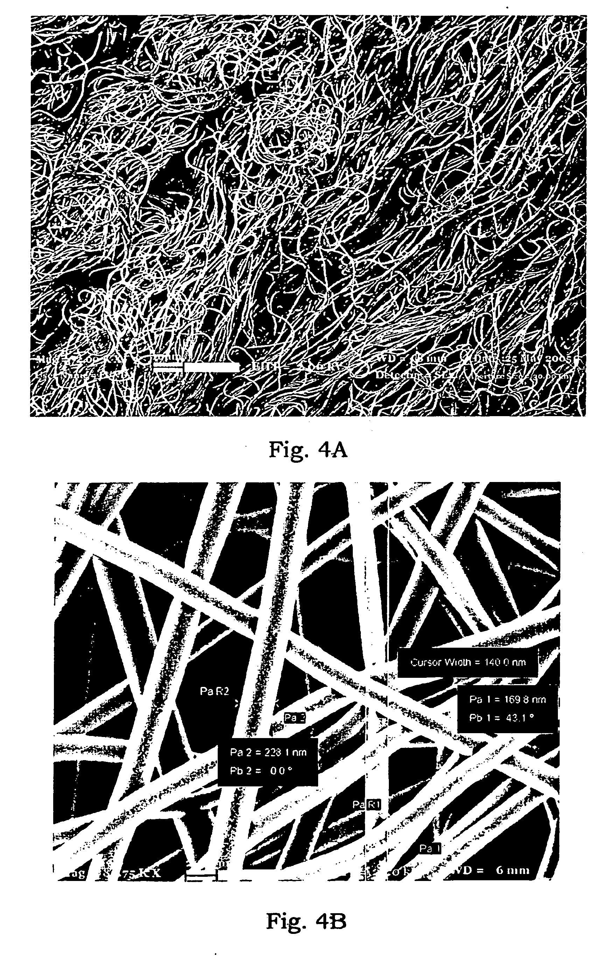

The electric field voltage ranges between 8 kV and 25 kV. The tip-to-plate distance is about 10 cm. The electrospinning process forms a polymer fiber membrane and the SEM analysis reveals that the average fiber diameter is about 350 nm (Figures 4A and 4B)

The polymer fiber is wetted with %1 v/v hydrazine-water solution and left for 24 hours. It is known that aqueous hydrazine solution is a non-solvent for both PdCl₂ and PAN-AMPS copolymer and a reducing agent for PdCl₂.

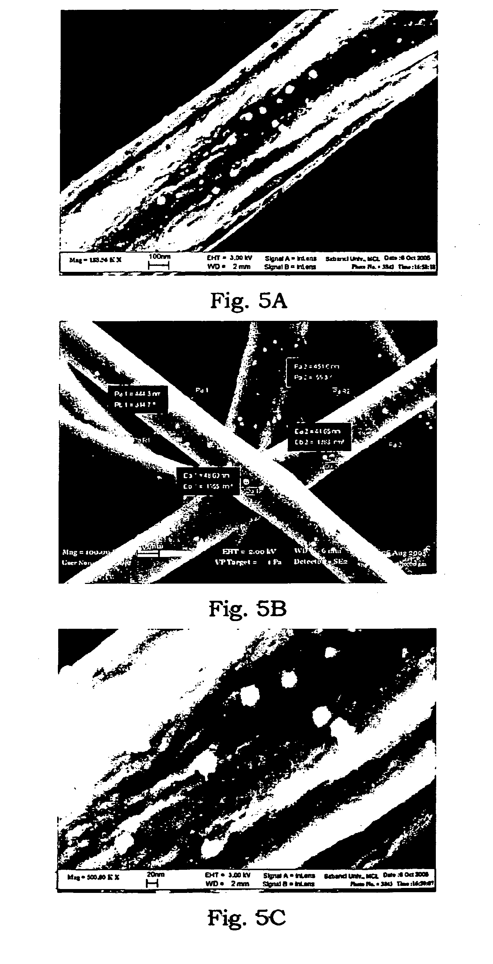

Metallic Pd appears after several hours of reaction time in the immersed state. The color of the film turned dark gray, indicating that the Pd²⁺ ions are reduced to Pd⁰ metal particles. The intensity of the color depends on the amount of PdCl₂ used. The electrospun fibers are then washed with distilled water several times until the extracting solution pH turns to neutral and than the fibers are dried in vacuum oven at 50°C, 1x10⁻² bar for 24 hours (Figures 5A, 5B and 5C).

The first stage of the heat treatment involves heating the polymeric fiber to temperature of 200°C in air for 30 minutes at a heating rate of 1°C /min. The second stage of the heat treatment involves heating to 800°C in argon for 60 min at a heating rate of 5°C.

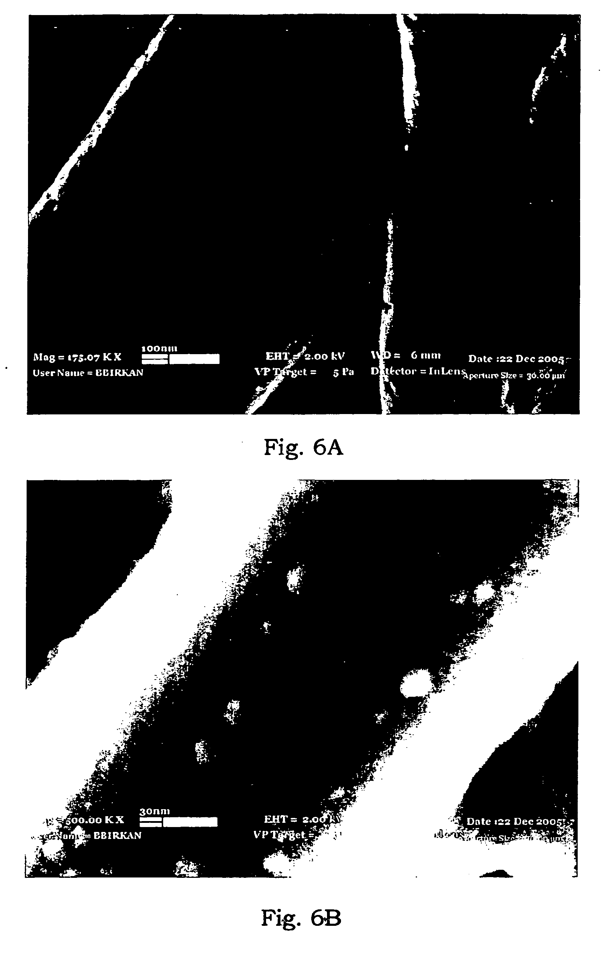

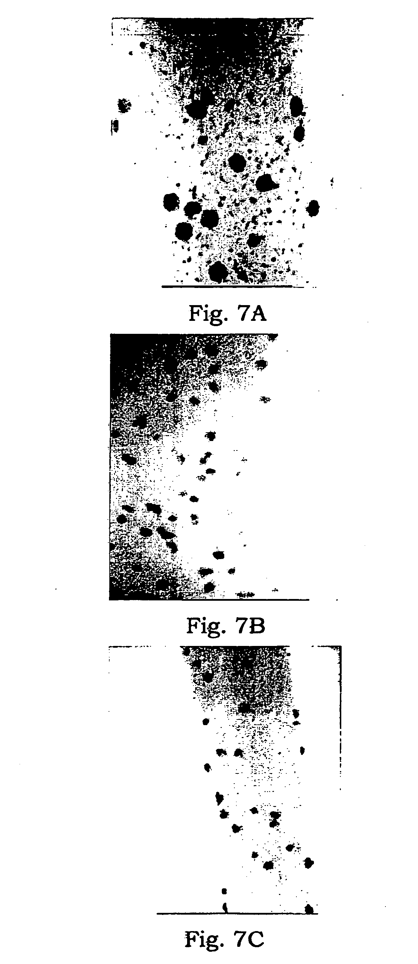

The structure of the nanofibers is analyzed using a SEM technique at the end of the heating cycle and reveals that average fiber diameter is about 300 nm (Figures 6A and 6B). The TEM analysis reveals that the average particle diameter distribution is about 5nm (Figures 7A, 7B and 7C)

This example shows how methods of the invention may be used to produce a carbon fiber membrane which includes catalytic material particles supported on the carbon fibers.

This example also shows the ability to control the particle size of the catalytic material particles by changing the processing conditions.

### EXAMPLE 2

A clear 15 wt % P(AN-co-5%AMPS) polymer solution is prepared by 1) adding 1.5g P(AN-co-5%AMPS) into 10 g (10.6 milliliter) N,N-dimethylformamide (DMF), 2) mixing with a magnetic stir bar at room temperature for 24 hours.

A 0.01 M salt solution is prepared by adding 3.54 mg palladium (II) chloride in 2.0 milliliter polymer solution. To ensure homogeneity the polymer solution is mixed for 24 hours with a magnetic stir bar at room temperature.

The homogeneous solution is electrospinned at the electric field voltage of 10 kV with the tip-to-plate distance about 10 cm. The electrospinning process forms a polymer fiber membrane and the SEM analysis reveals that the average fiber diameter is about 350 nm.

The polymer fiber is wetted with %1 v/v hydrazine-water solution and left for 24 hours. The electrospun fibers are then washed with distilled water several times until the extracting solution pH turns to neutral and than the fibers are dried in vacuum oven at 50°C, 1x10⁻² bar for 24 hours.

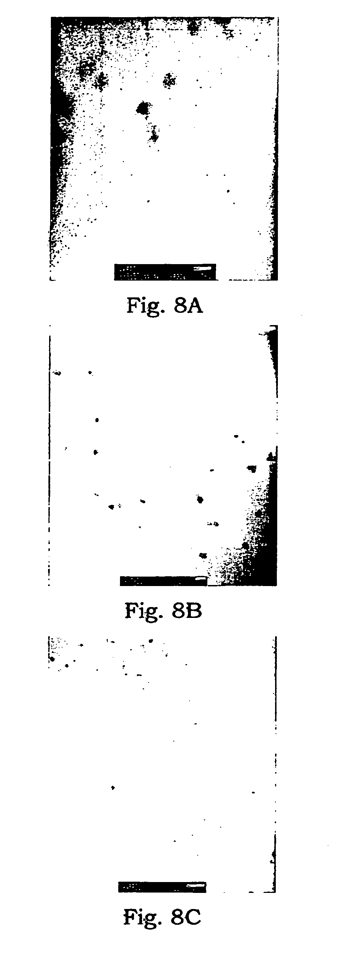

The structure of the nanofibers is analyzed using a SEM technique. The TEM analysis reveals that the average particle diameter distribution is about 10 nm (Figures 8A, 8B and 8C.)

### EXAMPLE 3

A clear 15 wt % P(AN-co-5%AMPS) polymer solution is prepared by 1) adding 1.5g P(AN-co-5%AMPS) into 10 g (10.6 milliliter) N,N-dimethylformamide (DMF), 2) mixing with a magnetic stir bar at room temperature for 24 hours.

A 0.005 M salt solution is prepared by adding 1.77 mg palladium (II) chloride in 2.0 milliliter polymer solution. To ensure homogeneity the polymer solution is mixed for 24 hours with a magnetic stir bar at room temperature.

The homogeneous solution is electrospinned at the electric field voltage of 10 kV with the tip-to-plate distance about 10 cm. The electrospinning process forms a polymer fiber membrane and the SEM analysis reveals that the average fiber diameter is about 350 nm.

The polymer fiber is wetted with %1 v/v hydrazine-water solution and left for 24 hours. The electrospun fibers are then washed with distilled water several times until the extracting solution pH turns to neutral and than the fibers are dried in vacuum oven at 50°C, 1 x10⁻² bar for 24 hours.

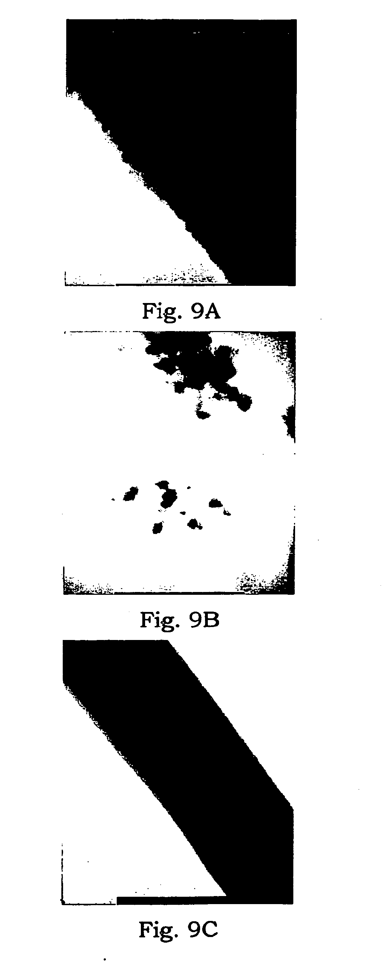

The structure of the nanofibers is analyzed using a SEM technique. The TEM analysis reveals that the average particle diameter distribution is about 20nm (Figures 9A, 9B and 9C).

### EXAMPLE 4

The solution copolymerization of acrylonitrile (AN) with vinylphosphonic acid (VPA) is accomplished in N,N-dimethylformamide (DMF) at 80°C for 24 hours. Monomers, initiator and solvent are purified before the reaction by conventional methods; recrystallization, vacuum distillation and passing through a column where needed.

Monomer ratios are selected to achieve a 95 mol % acrylonitrile and 5 mol % VPA in the final polymer according to the monomer reactivity ratios, 11.43gr acrylonitrile and 1.26gr VPA respectively.

AIBN is used as radical initiator at 1/1000 mol % ratio with respect to monomers. 20 ml of DMF is used as solvent. The solution is deaerated by 3 freeze-thaw cycles at liquid nitrogen temperature and the reactor vessel is kept at nitrogen atmosphere through bubbling during the reaction. The resulting product is precipitated in acetone and dried in vacuum oven at 50°C for 24 hours. 4.23gr of product handled at the end of the polymerization.

The 1H-NMR and FT-IR analysis results showed that polymer consists of 5% of VPA in the polymer backbone. Thermal analysis of the polymer shows a broad glass transition around 90°C and 140°C and following decomposition beginning from about 385°C and continues sharply to about 480°C by the loss of 40% of total mass to that temperature. The residual mass is around 55% at 800°C.

A clear 15 wt % P(AN-co-5%VPA) polymer solution is prepared by 1) adding 1.5g P(AN-co-5%VPA) into 10 g (10.6 milliliter) N,N-dimethylformamide (DMF), 2) mixing with a magnetic stir bar at room temperature for 24 hours.

A 0.05 M salt solution is prepared by adding 17.7 mg palladium (II) chloride in 2.0 milliliter polymer solution. To ensure homogeneity the polymer solution is mixed for 24 hours with a magnetic stir bar at room temperature.

The homogeneous solution is electrospinned at the electric field voltage of 10 kV with the tip-to-plate distance about 10 cm. The electrospinning process forms a polymer fiber membrane and the SEM analysis reveals that the average fiber diameter is about 350 nm.

The polymer fiber is wetted with %1 v/v hydrazine-water solution and left for 24 hours. It is known that aqueous hydrazine solution is a non-solvent for both PdCl₂ and PAN-VPA copolymer and a reducing agent for PdCl₂. The electrospun fibers are then washed with distilled water several times until the extracting solution pH turns to neutral and than the fibers are dried in vacuum oven at 50°C, 1x10⁻² bar for 24 hours.

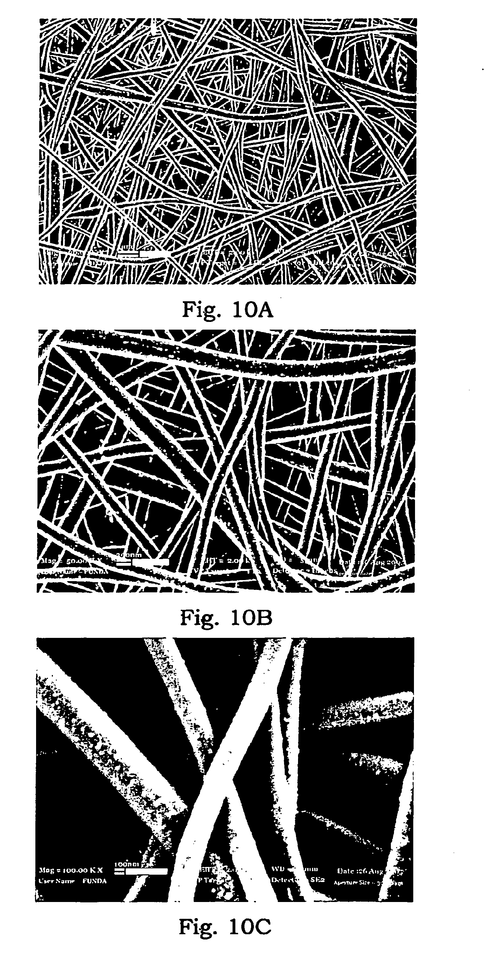

The structure of the nanofibers is analyzed using a SEM technique. The SEM analysis reveals that the average particle diameter distribution is about 40nm (Figures 10A, 10B and 10C).

### EXAMPLE 5

The solution copolymerization of acrylonitrile (AN) with 1-vinyl-2-pyrrolidinone (VPYR) is accomplished in N,N-dimethylformamide (DMF) at 80°C for 24 hours. Monomers, initiator and solvent are purified before the reaction by conventional methods; recrystallization, vacuum distillation and passing through a column where needed.

Monomer ratios are selected to achieve a 95 mol % acrylonitrile and 5 mol % VPYR in the final polymer according to the monomer reactivity ratios, 20.01gr acrylonitrile and 1.01gr VPYR respectively.

AIBN is used as radical initiator at 1/1000 mol % ratio with respect to monomers. 20 ml of DMF is used as solvent. The solution is deaerated by 3 freeze-thaw cycles at liquid nitrogen temperature and the reactor vessel is kept at nitrogen atmosphere through bubbling during the reaction. The resulting product is precipitated in acetone and dried in vacuum oven at 50°C for 24 hours. 11.94gr of product handled at the end of the polymerization.

The 1 H-NMR and FT-IR analysis results showed that polymer consists of 5% of VPYR in the polymer backbone. Thermal analysis of the polymer shows a broad glass transition around 120°C and 150°C and following decomposition beginning from about 365°C and continues sharply to about 490°C by the loss of 45% of total mass to that temperature. The residual mass is around 55% at 800°C.

A clear 15 wt % P(AN-co-5%VPYR) polymer solution is prepared by 1) adding 1.5g P(AN-co-5%VPYR) into 10 g (10.6 milliliter) N,N-dimethylformamide (DMF), 2) mixing with a magnetic stir bar at room temperature for 24 hours.

A 0.05 M salt solution is prepared by adding 17.7 mg palladium (II) chloride in 2.0 milliliter polymer solution. To ensure homogeneity the polymer solution is mixed for 24 hours with a magnetic stir bar at room temperature.

The homogeneous solution is electrospinned at the electric field voltage of 10 kV with the tip-to-plate distance about 10 cm. The electrospinning process forms a polymer fiber membrane and the SEM analysis reveals that the average fiber diameter is about 350 nm.

The polymer fiber is wetted with %1 v/v hydrazine-water solution and left for 24 hours. It is known that aqueous hydrazine solution is a non-solvent for both PdCl₂ and PAN-VPYR copolymer and a reducing agent for PdCl₂.

The electrospun fibers are then washed with distilled water several times until the extracting solution pH turns to neutral and than the fibers are dried in vacuum oven at 50°C, 1 x10⁻² bar for 24 hours.

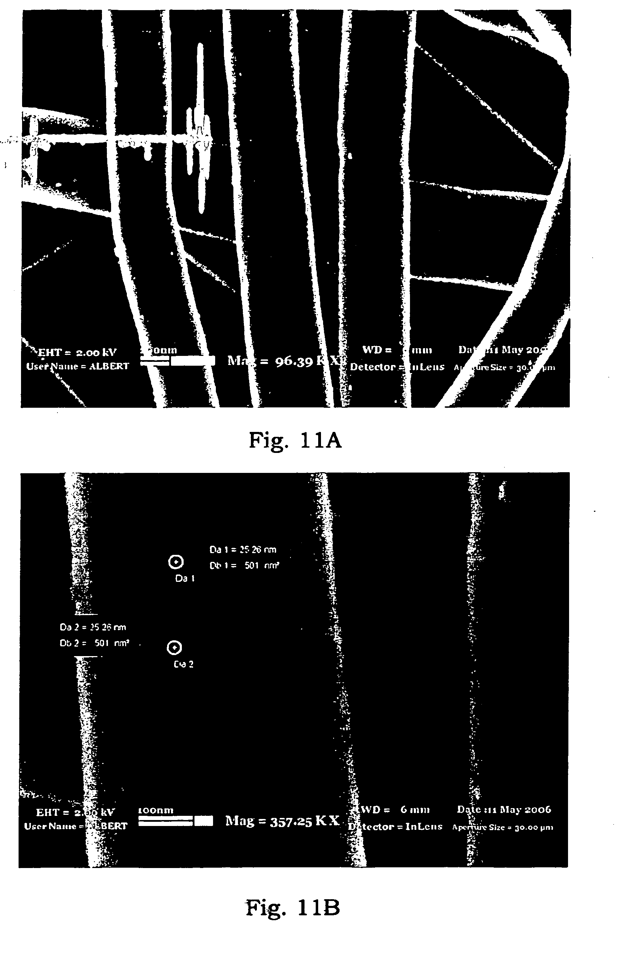

The structure of the nanofibers is analyzed using a SEM technique. The SEM analysis reveals that the average particle diameter distribution is about 20 nm (Figures 11A and 11B ).

### EXAMPLE 6

A clear 15 wt % P(AN-co-5%VPYR) polymer solution is prepared by 1) adding 1.5g P(AN-co-5%VPYR) into 10 g (10.6 milliliter) N,N-dimethylformamide (DMF), 2) mixing with a magnetic stir bar at room temperature for 24 hours.

A 0.05 M salt solution is prepared by adding 26.5 mg platinum (II) chloride in 2.0 milliliter polymer solution. To ensure homogeneity the polymer solution is mixed for 24 hours with a magnetic stir bar at room temperature.

The homogeneous solution is electrospinned at the electric field voltage of 10 kV with the tip-to-plate distance about 10 cm. The electrospinning process forms a polymer fiber membrane and the SEM analysis reveals that the average fiber diameter is about 350 nm.

The polymer fiber is wetted with %1 v/v hydrazine-water solution and left for 24 hours. It is known that aqueous hydrazine solution is a non-solvent for both PtCl₂ and PAN-VPYR copolymer and a reducing agent for PtCl₂. The electrospun fibers are then washed with distilled water several times until the extracting solution pH turns to neutral and than the fibers are dried in vacuum oven at 50°C, 1×10⁻² bar for 24 hours.

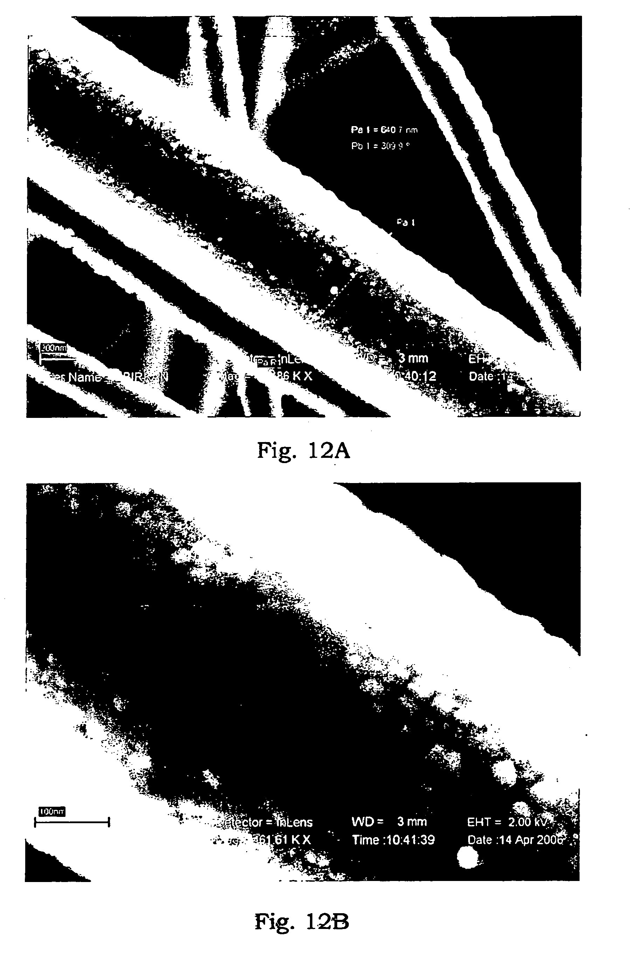

The structure of the nanofibers is analyzed using a SEM technique. The TEM analysis reveals that the average particle diameter distribution is about 40 nm (Figures 12A and 12B).

### Industrial application

The nanofibers of the invention may be used in a wide variety of catalytic applications. For example, the nanofibers may be used as membranes, filtration devices, electrodes in electrochemical devices, fuel-cell electrodes, photodiodes, batteries.

## Claims

1. Method for synthesizing carbon nanofibers containing catalytic material particles having an average particle size ranging of from 0.5 to 40nm comprising the following steps:
a) electrospinning a polymer solution and a catalytic material precursor for obtaining polymer fibers containing catalytic material precursor particles, the catalytical precursor concentration in the polymer solution being from 0.1 to 20.0wt% with respect to the polymer weight;
b) reducing the product obtained in a) with a reducing agent to form polymer fibers containing catalytic material particles;
c) heat treating the product obtained in b) for converting the polymer fibers containing catalytic material particles into carbon fibers containing catalytic material particles
**characterized in that**
the polymer in step a) is a radical or condensation polymerization product of a monomers chosen
I) from the group comprising vinylic monomers with
II) difunctional monomers, chosen so as to form an electrostatic interaction with the metal precursor to control the size and distribution of the metal precursor within the fiber matrix; wherein the percentage of the difunctional monomer ranges of from 1 to 99 mol % in the polymer backbone;
and **in that** in step c) the heat treatment is done by heating first to a temperature within a first temperature range of between 100°C and 500°C and then to a temperature within a second temperature range of between 500°C and 3500°C.

2. Method according to claim 1, **characterized in that** the difunctional monomer is chosen from the group comprising monomers with an acidic, acrylic, acrylate, alcohol, amine, amide, anhydride, arylene, carbonate, cyclic, esteric, etheric, heterocylic, ketonic, olefinic, oxide, sulfide, sulfonamide, sulfonic, thiazole, thiol, or phosphonic side chain or a monomer with a side chain of having a combination of these functional groups.

3. Method according to any one of the preceding claims, **characterized in that** in step a) the catalytic material precursor is a compound of metal chosen from compounds of palladium, platinum, gold, silver, rhodium, rhenium, ruthenium, osmium, iridium, iron, chromium, cobalt, copper, nickel, manganese, tungsten, molybdenum, niobium, scandium, titanium, vanadium, lanthanum, tantalum, lead, indium, cadmium, tin, bismuth, hafnium, yttrium, zirconium, technetium, antimony and gallium or a combination of those.

4. Method according to any one of the preceding claims, **characterized in that** in step a) the polymer solution is formed with a method chosen from the group comprising: dissolving the catalytic material precursor in the polymer solution; dissolving together a polymeric material and a compound of a catalytic material precursor; and dispersing the solid catalytic material particles in the polymer solution or a combination of those.

5. Method according to any one of the preceding claims, **characterized in that** in step b) the reducing agent is chosen from the group comprising hydrazine compounds like hydrazine hydrochloride, hydrazine sulfate, hydrazine hydrate); alkali borohydride, formaldehyde, substituted pyridines, hypophosphites, phosphites, hyposulfites, sulfites, sulfoxylates, thiosulfates, azides, or formates, CuCl and SnCl₂ dissolved in a solvent.

6. Method according to any one of the preceding claims, **characterized in that** in step c) the heat treatment is done by heating first to a temperature within a first temperature range of between 100°C and 500°C and then to a temperature within a second temperature range of between 500°C and 1150°C.

7. First intermediate product obtained in step a) of claim 1, **characterized in that** it is a polymer fiber having an average fiber diameter between 30nm and 500nm and containing catalytic material precursor particles.

8. Intermediate product obtained in step b) of claim 1, **characterized in that** it is a polymer fiber having an average fiber diameter of between 30nm and 500nm and containing catalytic material particles.

9. Intermediate product according to claim 8, **characterized in that** the catalytic material particles are dispersed throughout the structure of the polymer fibers at a substantially constant concentration.

10. Intermediate product according to any one of claims 8 and 9, **characterized in that** the catalytic material particle concentration in the polymer fiber containing catalytic material particles is less than 0.2 mg catalytic material /cm².

11. Product obtained in the method according to any one of claims 1 to 6, **characterized in that** said product is carbon nanofibers containing catalytic material particles comprising at least one carbon fiber having a length greater than 500µm containing the catalytic material particles having an average particle size ranging of from 0.5 to 40nm in and on the structure of the carbon fiber.

12. Product according to claim 11, **characterized in that** the carbon fibers are solid and have a thickness less than 10µm.

13. Product according to any one of claims 11 and 12, **characterized in that** the carbon fibers have a length greater than 1cm and an average diameter of between 30 nm and 500 nm.

14. Product according to any one of claims 11 to 13, **characterized in that** the catalytic material particle concentration of the carbon fibers is less than 0.2 mg catalytic material /cm² area.

15. Product according to any one of claims 11 to 14 **characterized in that** the resistivity of the carbon fibers containing catalytic material particles is less than 0.1 Ohms-m.

16. Product according to any one of claims 11 to 15, **characterized in that** the catalytic material particles are dispersed throughout the structure of the carbon fiber in a substantially constant concentration.

17. Use of the product according to any one of claims 11 to 16 in applications chosen from the group comprising: membranes, filtration devices, electrodes in electrochemical devices, fuel-cell electrodes, photodiodes, batteries.

## Patentansprüche

1. Verfahren zur Synthese von Kohlenstoffnanofasern, die Partikel eines katalytischen Materials enthalten, wobei die Partikel eine durchschnittliche Partikelgröße haben, die von 0,5 bis 40 nm reicht, umfassend die nachfolgenden Schritte:
a) das Elektrospinnen einer Polymerlösung und eines Vorläufers eines katalytischen Materials, um Vorläuferpartikel eines katalytischen Materials enthaltende Polymerfasern zu erhalten, wobei die Konzentration an katalytischem Vorläufer in der Polymerlösung zwischen 0,1 bis 20,0 Gew.-%, bezogen auf das Polymergewicht, beträgt;
b) die Reduktion des in a) erhaltenen Produkts mit einem Reduktionsmittel, um Partikel eines katalytischen Materials enthaltende Polymerfasern zu bilden;
c) die Wärmebehandlung des in b) erhaltenen Produkts zur Umwandlung der Partikel eines katalytischen Materials enthaltenden Polymerfasern in Kohlenstofffasern, die Partikel des katalytischen Materials enthalten;
**dadurch gekennzeichnet, dass**
das Polymer in Schritt a) ein Radikal oder ein Kondensations-Polymerisationsprodukt eines Monomers ist, ausgewählt
I) aus der Gruppe umfassend Vinylmonomere mit
II) difunktionellen Monomeren, ausgewählt, um eine elektrostatische Wechselwirkung mit dem Metall-Vorläufer zu bilden, um die Größe und Verteilung des Metall-Vorläufers innerhalb der Fasermatrix zu steuern; wobei der Prozentsatz des difunktionellen Monomers von 1 bis 99 mol-% im Polymerrückgrats beträgt;
und dass im Schritt c) die Wärmebehandlung **dadurch** durchgeführt wird, dass zunächst auf eine Temperatur innerhalb eines ersten Bereichs zwischen 100°C und 500°C erhitzt wird und dann auf eine Temperatur innerhalb eines zweiten Bereichs zwischen 500°C und 3500°C.

2. Verfahren nach Anspruch 1, **dadurch gekennzeichnet, dass** das difunktionelle Monomer aus der Gruppe gewählt ist, umfassend Monomere mit einer Säure-, Acryl-, Acrylat-, Alkohol-, Amin-, Amid-, Anhydrid-, Arylen-, Carbonat-, Cyclo-, Ester-, Ether-, Heterocyclo-, Keton-, Olefin-, Oxid-, Sulfid-, Sulfonamid-, Sulfon-, Thiazol-, Thiol-, oder Phosphon-Seitenkette oder ein Monomer mit einer eine Kombination dieser funktioneller Gruppen enthaltenden Seitenkette.

3. Verfahren nach irgendeinem der vorhergehenden Ansprüche, **dadurch gekennzeichnet, dass** in Stufe a) der Vorläufer des katalytischen Materials eine Metallverbindung, ausgewählt aus Verbindungen von Palladium, Platin, Gold, Silber, Rhodium, Rhenium, Ruthenium, Osmium, Iridium, Eisen, Chrom, Kobalt, Kupfer, Nickel, Mangan, Wolfram, Molybdän, Niob, Skandium, Titan, Vanadium, Lanthan, Tantal, Blei, Indium, Cadmium, Zinn, Wismut, Hafnium, Yttrium, Zirkon, Technetium, Antimon und Gallium oder deren Kombination, ist.

4. Verfahren nach irgendeinem der vorhergehenden Ansprüche, **dadurch gekennzeichnet, dass** in Schritt a) die Polymerlösung durch ein Verfahren gebildet ist, ausgewählt aus der Gruppe umfassend: das Auflösen des Vorläufers eines katalytischen Materials in der Polymerlösung; das gemeinsame Auflösen eines Polymer-Materials und einer Verbindung eines Vorläufers eines katalytischen Materials; und das Dispergieren der festen Partikel des katalytischen Materials in der Polymerlösung oder deren Kombination.

5. Verfahren nach irgendeinem der vorhergehenden Ansprüche, **dadurch gekennzeichnet, dass** in Schritt b) das Reduktionsmittel ausgewählt ist aus der Gruppe umfassend Hydrazinverbindungen wie Hydrazinhydrochlorid, Hydrazinsulfat, Hydrazinhydrat; Alkaliborhydrid, Formaldehyd, substituierte Pyridine, Hypophosphite, Phosphite, Hyposulfite, Sulfite; Sulfoxylate, Thiosulfate, Azide oder Formate, CuCl und SnCl₂, gelöst in einem Lösungsmittel.

6. Verfahren nach irgendeinem der vorhergehenden Ansprüche, **dadurch gekennzeichnet, dass** in Schritt c) die Wärmebehandlung **dadurch** ausgeführt wird, dass zuerst auf eine Temperatur innerhalb eines ersten Temperaturbereichs zwischen 100°C und 500°C und dann auf eine Temperatur innerhalb eines zweiten Temperaturbereichs zwischen 500°C und 1150°C erhitzt wird.

7. Das erste Zwischenprodukt erhalten in Schritt a) von Anspruch 1, **dadurch gekennzeichnet, dass** es eine Polymerfaser ist, die einen durchschnittlichen Faserdurchmesser zwischen 30 nm und 500 nm aufweist und Vorläuferpartikel eines katalytischen Materials enthält.

8. Zwischenprodukt, erhalten in Schritt b) von Anspruch 1, **dadurch gekennzeichnet, dass** es eine Polymerfaser ist, die einen durchschnittlichen Faserdurchmesser zwischen 30 nm und 500 nm aufweist und Partikel des katalytischen Materials enthält.

9. Zwischenprodukt nach Anspruch 8, **dadurch gekennzeichnet, dass** die Partikel eines katalytischen Materials über die ganze Struktur der Polymerfasern in einer im Wesentlichen konstanten Konzentration dispergiert sind.

10. Zwischenprodukt nach irgendeinem der Ansprüche 8 und 9, **dadurch gekennzeichnet, dass** die Konzentration der Partikel eines katalytischen Materials in der Partikel eines katalytischen Materials enthaltenden Polymerfaser geringer als 0,2 mg katalytisches Material/cm² ist.

11. Produkt, erhalten im Verfahren nach irgendeinem der Ansprüche 1 bis 6, **dadurch gekennzeichnet, dass** das Produkt Partikel des katalytischen Materials enthaltende Kohlenstoffnanofasem sind, umfassend mindestens eine Kohlenstofffaser, die eine Länge aufweist, die größer als 500 µm ist, und die Partikel eines katalytischen Materials in und auf der Struktur der Kohlenstofffaser enthält, die eine durchschnittliche Partikelgröße haben, die von 0,5 bis 40 nm reicht.

12. Produkt nach Anspruch 11, **dadurch gekennzeichnet, dass** die Kohlenstofffasern stabil sind und eine Dicke von weniger als 10 µm haben.

13. Produkt nach irgendeinem der Ansprüche 11 und 12, **dadurch gekennzeichnet, dass** Kohlenstofffasern eine Länge von größer als 1 cm und einen durchschnittlichen Durchmesser zwischen 30 mm und 500 nm haben.

14. Produkt nach irgendeinem der Ansprüche 11 bis 13, **dadurch gekennzeichnet, dass** die Konzentration an Partikel des katalytischen Materials der Kohlenstofffasern weniger als 0,2 mg katalytisches Material/ cm² Fläche ist.

15. Produkt nach irgendeinem der Ansprüche 11 bis 14, **dadurch gekennzeichnet, dass** die Widerstandsgröße der Partikel des katalytischen Materials enthaltenden Kohlenstofffasern weniger als 0,1 Ohm-m beträgt.

16. Produkt nach irgendeinem der Ansprüche 11 bis 15, **dadurch gekennzeichnet, dass** die Partikel des katalytischen Materials über die ganze Struktur der Kohlenstofffaser in einer im Wesentlichen konstanten Konzentration dispergiert sind.

17. Einsatz des Produkts nach irgendeinem der Ansprüche 11 bis 16 in Anwendungen, ausgewählt aus der Gruppe, umfassend: Membranen, Filtrationsvorrichtungen, Elektroden in elektrochemischen Vorrichtungen, Brennstoffzellen-Elektroden, Fotodioden, Batterien.

## Revendications

1. Procédé pour synthétiser des nanofibres de carbone contenant des particules d'un matériau catalytique ayant une granulométrie moyenne comprise dans la plage de 0,5 à 40 nm, comprenant les étapes suivantes :
a) électrofilage d'une solution de polymère et d'un précurseur d'un matériau catalytique, pour obtenir des fibres polymères contenant des particules du précurseur d'un matériau catalytique, la concentration du précurseur catalytique dans la solution du polymère étant de 0,1 à 20 % en poids par rapport au poids du polymère ;
b) réduction du produit obtenu en a), avec un agent réducteur, pour former des fibres polymères contenant des particules du matériau catalytique ;
c) traitement thermique du produit obtenu en b), pour convertir les fibres polymères contenant des particules du matériau catalytique en fibres de carbone contenant des particules du matériau catalytique,
**caractérisé en ce que** le polymère, dans l'étape a), est un produit d'une polymérisation radicalaire ou par condensation, d'un monomère choisi
I) dans le groupe comprenant les monomères vinyliques, avec
II) des monomères difonctionnels choisis de façon à former une interaction électrostatique avec le précurseur métallique, pour agir sur la taille et la distribution du précurseur métallique à l'intérieur de la matrice fibreuse ; le pourcentage du monomère difonctionnel étant compris dans la plage de 1 à 99 % en moles dans le squelette polymère ;
et **en ce que**, dans l'étape c), le traitement thermique est effectué par chauffage d'abord à une température comprise dans une première plage de températures de 100 à 500°C, puis à une température comprise dans une deuxième plage de températures de 500 à 3500°C.

2. Procédé selon la revendication 1, **caractérisé en ce que** le monomère difonctionnel est choisi dans le groupe comprenant les monomères comportant une chaîne latérale acide, acrylique, acrylate, alcool, amine, amide, anhydride, arylène, carbonate, cyclique, de type ester, de type éther, hétérocyclique, cétonique, oléfinique, oxyde, sulfure, sulfonamide, sulfonique, thiazole, thiol ou phosphonique, ou un monomère comportant une chaîne latérale ayant une combinaison de ces groupes fonctionnels.

3. Procédé selon l'une quelconque des revendications précédentes, **caractérisé en ce que**, dans l'étape a), le précurseur du matériau catalytique est un composé d'un métal choisi parmi les composés du palladium, du platine, de l'or, de l'argent, du rhodium, du rhénium, du ruthénium, de l'osmium, de l'iridium, du fer, du chrome, du cobalt, du cuivre, du nickel, du manganèse, du tungstène, du molybdène, du niobium, du scandium, du titane, du vanadium, du lanthane, du tantale, du plomb, de l'indium, du cadmium, de l'étain, du bismuth, du hafnium, de l'yttrium, du zirconium, du technétium, de l'antimoine et du gallium, ou une combinaison de ceux-ci.

4. Procédé selon l'une quelconque des revendications précédentes, **caractérisé en ce que**, dans l'étape a), la solution du polymère est formée par un procédé choisi dans le groupe comprenant la dissolution du précurseur du matériau catalytique dans la solution du polymère ; la dissolution simultanée d'un matériau polymère et d'un composé d'un précurseur du matériau catalytique ; et la dispersion des particules du matériau catalytique solide dans la solution du polymère, ou une combinaison de ceux-ci.

5. Procédé selon l'une quelconque des revendications précédentes, **caractérisé en ce que**, dans l'étape b), l'agent réducteur est choisi dans le groupe comprenant les composés de l'hydrazine tels que le chlorhydrate d'hydrazine, le sulfate d'hydrazine, l'hydrate d'hydrazine ; les borohydrures de métaux alcalins, le formaldéhyde, les pyridines substituées, les hypophosphites, les phosphites, les hyposulfites, les sulfites, les sulfoxylates, les thiosulfates, les azotures ou les formiates, CuCl et SnCl₂ dissous dans un solvant.

6. Procédé selon l'une quelconque des revendications précédentes, **caractérisé en ce que**, dans l'étape c), le traitement thermique est effectué par chauffage d'abord à une température comprise dans une première plage de températures de 100 à 500°C, puis à une température comprise dans une deuxième plage de températures de 500 à 1150°C.

7. Premier produit intermédiaire obtenu dans l'étape a) de la revendication 1, **caractérisé en ce qu'**il s'agit d'une fibre polymère ayant un diamètre moyen de fibres compris entre 30 et 500 nm et contenant des particules du précurseur du matériau catalytique.

8. Produit intermédiaire obtenu dans l'étape b) de la revendication 1, **caractérisé en ce qu'**il s'agit d'une fibre polymère ayant un diamètre moyen de fibres compris entre 30 et 500 nm et contenant des particules du matériau catalytique.

9. Produit intermédiaire selon la revendication 8, **caractérisé en ce que** les particules du matériau catalytique sont dispersées dans tout le volume de la structure des fibres polymères, à une concentration essentiellement constante.

10. Produit intermédiaire selon l'une quelconque des revendications 8 et 9, **caractérisé en ce que** la concentration des particules du matériau catalytique dans la fibre polymère contenant des particules du matériau catalytique est inférieure à 0,2 mg du matériau catalytique/cm².

11. Produit obtenu par le procédé selon l'une quelconque des revendications 1 à 6, **caractérisé en ce que** ledit produit est constitué de nanofibres de carbone contenant des particules d'un matériau catalytique comprenant au moins une fibre de carbone ayant une longueur supérieure à 500 µm, contenant les particules du matériau catalytique ayant une granulométrie moyenne comprise dans la plage de 0,5 à 40 nm dans et sur la structure de la fibre de carbone.

12. Produit selon la revendication 11, **caractérisé en ce que** les fibres de carbone sont solides et ont une épaisseur inférieure à 10 µm.

13. Produit selon l'une quelconque des revendications 11 et 12, **caractérisé en ce que** les fibres de carbone ont une longueur supérieure à 1 cm et un diamètre moyen compris entre 30 et 500 nm.

14. Produit selon l'une quelconque des revendications 11 à 13, **caractérisé en ce que** la concentration des particules du matériau catalytique dans les fibres de carbone est inférieure à 0,2 mg du matériau catalytique par cm² d'aire.

15. Produit selon l'une quelconque des revendications 11 à 14, **caractérisé en ce que** la résistivité des fibres de carbone contenant les particules du matériau catalytique est inférieure à 0,1 Ohm-m.

16. Produit selon l'une quelconque des revendications 11 à 15, **caractérisé en ce que** les particules du matériau catalytique sont dispersées dans tout le volume de la structure de la fibre de carbone à une concentration essentiellement constante.

17. Utilisation du produit selon l'une quelconque des revendications 11 à 16 dans des applications choisies dans le groupe comprenant les membranes, les dispositifs de filtration, les électrodes des dispositifs électrochimiques, les électrodes des piles à combustible, les photodiodes, les batteries.
